# EUROPÄISCHE PATENTSCHRIFT

(11) **EP 1 415 306 B1**
(45) Veröffentlichungstag und Bekanntmachung des Hinweises auf die Patenterteilung: **27.06.2007**
(21) Anmeldenummer: 02794565.8
(22) Anmeldetag: 07.08.2002
(51) Int. Cl.: G21C 3/62

(54) **VERFAHREN ZUR HERSTELLUNG EINES MISCHOXID-KERNBRENNSTOFF-PULVERS UND EINES MISCHOXID-KERNBRENNSTOFF-SINTERKÖRPERS**
METHOD FOR PRODUCING A MIXED OXIDE NUCLEAR FUEL POWDER AND A MIXED OXIDE NUCLEAR FUEL SINTERED COMPACT
PROCEDE POUR PRODUIRE UNE POUDRE DE COMBUSTIBLE NUCLEAIRE A OXYDES MIXTES ET UN COMPRIME FRITTE DE COMBUSTIBLE NUCLEAIRE A OXYDES MIXTES

(30) Priorität: 08.08.2001 DE 10138874
(43) Veröffentlichungstag der Anmeldung: 06.05.2004
(73) Patentinhaber: AREVA NP GmbH, 91058 Erlangen (DE)
(72) Erfinder: DÖRR, Wolfgang, 91074 Herzogenaurach (DE); PEEHS, Martin, 91088 Bubenreuth (DE)
(74) Vertreter: Mörtel & Höfner
(86) Internationale Anmeldenummer: PCT/EP2002/008800
(87) Internationale Veröffentlichungsnummer: WO 2003/015105

(56) Entgegenhaltungen:
- EP-A- 0 277 708
- EP-A- 1 081 716
- WO-A-00/30978
- WO-A-00/45394
- WO-A-01/03143
- DE-A- 1 938 470
- GB-A- 2 330 684
- US-A- 4 247 495
- US-A- 4 788 048
- US-A- 4 889 663
- US-A- 5 841 200
- D. HAAS ET AL.: "MOX fuel fabrication and in-reactor performance" PROC. INT. CONF. ON FUTURE NUCLEAR SYSTEMS, GLOBAL 97, - 1997 Seiten 489-494, XP000869930

## Beschreibung

Die Erfindung bezieht sich auf ein Verfahren zur Herstellung eines MOX-Kernbrennstoff-Pulvers und auf ein Verfahren zur Herstellung eines MOX-Kernbrennstoff-Sinterkörpers.

Kernbrennstoffe werden in der Regel in Brennelementen bereitgestellt. Diese können je nach Reaktortyp unterschiedliche Bauweisen und geometrische Formen (z. B. plattenartig oder länglich) aufweisen. Bei üblichen Leichtwasserreaktoren, d. h. alle mit Leichtwasser als Kühlmittel arbeitenden Reaktoren wie Siedewasserreaktoren, Druckwasserreaktoren und Reaktoren russischer Bauart (VVER-Reaktoren), werden Kernbrennstoffe in Brennstäben bereitgestellt, die gebündelt zu einem Brennelement zusammengefasst sind. Ein Brennstab weist ein üblicherweise aus einem Zirkoniummaterial hergestelltes Hüllrohr auf, welches den Kernbrennstoff umschließt und ein Austreten von Kernbrennstoff oder Spaltprodukten während des Reaktoreinsatzes verhindert.

Ein Kernbrennstoff, also ein Uran-Kernbrennstoff oder ein Mischoxid-Kernbrennstoff (MOX-Kernbrennstoff) liegt beispielsweise als Pulver, Formkörper oder Sinterkörper oder in anderer geeigneter Form vor.

Ein Uran-Kernbrennstoff weist neben Anteilen von UO₂ (Urandioxid) praktisch keine weiteren Anteile eines spaltbaren Schwermetalls auf. Ein MOX-Kernbrennstoff weist dagegen weitere spaltbare Schwermetalle auf. Der am häufigsten eingesetzte MOX-Kernbrennstoff weist als Sinterkörper im Wesentlichen Anteile von Uran-Plutonium-Oxid (U, Pu)O₂ auf, d. h. ein Dioxid einer spaltbaren Schwermetallkomponente, die aus Uran sowie einem geringeren Anteil Plutonium besteht. Die Schwermetallkomponente kann auch ein weiteres spaltbares Schwermetall aufweisen, beispielsweise Thorium. Solch ein MOX-Kernbrennstoff-Sinterkörper weist dann im Wesentlichen Anteile von Uran-Thorium-Dioxid (U, Th)O₂ auf. Weiter können Anteile von UO₂, PuO₂, ThO₂ und/oder weitere spaltbare Schwermetalloxide vorhanden sein.

Zur Herstellung eines MOX-Kernbrennstoffes wird von geeigneten spaltbaren schwermetalloxidhaltigen (UO₂, PuO₂, ThO₂) Pulvern ausgegangen, die im weiteren Herstellungsverfahren gemischt werden. Neben einem UO₂-haltigen Pulver kann zudem auch ein U308-haltiges Pulver mit einem schwermetalloxidhaltigen Pulver vermischt werden. In den genannten Verbindungen für einen MOX-Kernbrennstoff kann u. a. deshalb das Verhältnis von Sauerstoff zu Schwermetall geringfügig von dem stöchiometrischen Verhältnis 2:1 abweichen. Insbesondere kann der Sauerstoff überstöchiometrisch vorliegen. Beispielsweise kann das Uranoxid als UO₂+x vorliegen. Vorzugsweise kann x dabei bis zu 0.25 betragen.

Zur Herstellung eines MOX-Kernbrennstoffs müssen also im Unterschied zur Herstellung eines üblichen Uran-Kernbrennstoff verschiedene spaltbare Schwermetall-enthaltende Komponenten, welche üblicherweise als Pulver mit unterschiedlichen Eigenschaften vorliegen, miteinander vermischt werden. Den Eigenschaften der Pulver kommt deshalb beim Herstellungsprozess eine wichtige Bedeutung zu.

Die schwermetallhaltigen Pulver werden in Konversionsverfahren gewonnen. Die Konversionsverfahren für UO₂-haltige Pulver lassen sich grundsätzlich anhand des Konversionsverfahrens zur Herstellung von UO₂ aus UF₆ unterscheiden. Dies sind zum einen trockenchemische oder andere direkte Konversionsverfahren (trockene Herstellungsverfahren) und zum anderen naßchemische Konversionsverfahren (nasse Herstellungsverfahren). Unter den trockenen Herstellungsverfahren zur Herstellung eines MOX-Kernbrennstoffs werden also solche verstanden, bei denen jedenfalls ein UO₂-haltiges Pulver unter Einsatz der Trockenkonversion hergestellt gewonnen wird.

Bei den naßchemischen Konversionsverfahren wird ein UO₂-Pulver aus Uranhexafluorid (UF₆) nach der Ausfällung und Abtrennung einer Zwischenstufe aus einer Lösung gewonnen. Ein UO₂-Pulver wird also indirekt aus UF₆ gewonnen. Bekannte Verfahren sind nach ihren Zwischenstufen benannt, beispielsweise das AUC-Verfahren (Ammonium Uranylcarbonat) oder das ADU-Verfahren (Ammonium-Diuranat).

Die aus naßchemischen Konversionsverfahren gewonnenen Pulver weisen in ihrer Beschaffenheit (z. B. morphologische Struktur und Dichte) erhebliche Unterschiede zu denen aus trockenchemischen Konversionsverfahren gewonnenen auf. Die Weiterbehandlung eines aus einem naßchemischen Konversionsverfahren gewonnenen Pulvers erfolgt deshalb nach anderen Voraussetzungen und Überlegungen als die eines aus einem trockenchemischen Konversionsverfahren gewonnenen Pulvers. Die Eigenschaften von Pulvern aus naßchemischen Verfahren und Kenntnisse betreffend deren Weiterbehandlung lassen sich deshalb nicht für die von Pulvern aus trockenchemischen Verfahren und deren Weiterbehandlung nutzen, da sich die trockenchemisch und naßchemisch hergestellten Pulverarten zu stark unterscheiden. Die naßchemischen Konversionsverfahren weisen eine besonders hohe radioaktive Abfallerzeugung auf, was erhebliche ökologische und ökonomische Nachteile im Vergleich zu den trockenchemischen Verfahren mit sich bringt.

Bei trockenchemischen oder anderen direkten Konversionsverfahren (Dry Conversion, DC) wird üblicherweise Uranhexafluorid (UF₆) mit Wasser und Wasserstoff direkt zu Urandioxid umgesetzt, und zwar entsprechend der folgenden Gesamtgleichung:

UF₆ + 2H₂O + H₂ → UO₂ + 6HF

Das dabei entstehende UO₂-haltige Pulver kann als Ausgangspulver zur Herstellung eines MOX-Kernbrennstoff-Pulvers genutzt werden und macht den überwiegenden Teil eines MOX-Kernbrennstoff-Pulvers aus.

Zur Weiterbehandlung eines MOX-Kernbrennstoff-Pulvers kann u. a. zur Beeinflussung der Eigenschaften eines MOX-Kernbrennstoff-Sinterkörpers und/oder aus für das Herstellungsverfahren relevanten Gründen einem MOX-Kernbrennstoff-Pulver Additive zugegeben werden.

Das MOX-Kernbrennstoff-Pulver wird dann üblicherweise in eine Pressmatrize eingefüllt und zu Formkörpern verpresst, die dann zu Kernbrennstoff-Sinterkörpern gesintert werden. Beim Sintern der Formkörper wachsen die Kristallite des Ausgangspulvers zu Körnern im Sinterkörper zusammen.

Die Eigenschaften eines MOX-Kernbrennstoff-Sinterkörpers hängen in vielfältiger Weise vom Herstellungsprozess des MOX-Kernbrennstoff-Pulvers ab. Dabei kommt insbesondere dem Konversionsverfahren, dem Mischverfahren, der Weiterbehandlung der Pulvermischung, und dem Sinterverfahren Bedeutung zu.

Insbesondere sollte ein Sinterverfahren auf ein aus einer Trockenkonversion oder einem anderen direkten Konversionsverfahren gewonnenen Pulver abgestimmt sein, um einen Sinterkörper zu erhalten, der hinsichtlich seiner mechanischen, chemischen und thermischen Eigenschaften für den Einsatz in Kernreaktoren geeignet ist.

Auch hinsichtlich der Verknüpfung der genannten Herstellungsschritte ist die Herstellung eines MOX-Kernbrennstoffs von der eines üblichen Kernbrennstoffs zu unterscheiden.

Für den Herstellungsprozess eines MOX-Kernbrennstoff-Pulvers und den Herstellungsprozess eines MOX-Kernbrennstoff-Sinterkörpers ist es von besonderem Interesse, eine ausreichende Homogenisierung bei der Mischung des UO₂-haltigen Pulvers mit anderen schwermetallhaltigen Pulvern zu erreichen. Es sollte eine homogene und gute Durchmischung verschiedener Pulverarten erreicht werden. Die verschiedenen Pulver haben aber unterschiedliche mechanische Eigenschaften, die eine homogene und gute Durchmischung der verschiedenen Pulverarten sowie auch das gleichmäßige und dichte Einfüllen der Pulvermischungen in die Pressform erschweren.

In der US 4,889,663 ist ein Verfahren zur Herstellung eines Uran-Kernbrennstoff-Sinterkörpers beschrieben unter Verwendung eines aus einer Trockenkonversion gewonnenen UO₂-haltigen Pulvers und einem U₃O₈-haltigen Pulver. Dabei wird auch auf die Möglichkeit zur Herstellung eins MOX-Kernbrennstoff-Pulvers vom Typ UO₂-PuO₂, UO₂-ThO₂ oder UO₂-GdO₂ hingewiesen. Die UO₂- und U₃O₈-haltigen Pulver weisen allerdings eine wenig homogene Struktur und insbesondere zusammenhängende U₃O₈-Agglomerate auf. Die Pulver werden deshalb in einer Hammermühle gemischt und gemahlen. Die Pulver werden danach desagglomeriert. Gegebenenfalls werden die Pulver nochmals gemahlen und/oder gesiebt. Diese Maßnahmen sind gemäß der US 4,889,663 zur Erreichung einer intensiven Mischung der UO₂-haltigen und U₃O₈-haltigen Pulver notwendig.

Aus der US-A-4 788 048 ist ein 4- bzw 5-stufiges Verfahren zur Bereitstellung von rieselfähigem UO₂-haltigem Pulver bekannt.

Der Erfindung liegt die Aufgabe zugrunde ein Verfahren zur Herstellung eines MOX-Kernbrennstoff-Pulvers anzugeben, bei dem von einem zu einem überwiegenden Teil aus einem trockenchemischen oder anderem direkten Konversionsverfahren gewonnenes UO₂-haltiges Pulver ausgegangen wird und das hinsichtlich der Bereitstellung einer sinterfähigen, innigen Pulvermischung eines MOX-Kernbrennstoff-Pulvers verbessert ist. Dabei soll insbesondere der Aufwand zur Bereitstellung einer sinterfähigen, innigen Pulvermischung eines MOX-Kernbrennstoff-Pulvers verringert sein. Ebenso soll ein entsprechendes Verfahren zur Herstellung eines MOX-Kernbrennstoff-Sinterkörpers angegeben werden.

Hinsichtlich des Verfahrens zur Herstellung eines Mischoxidpulvers wird die Aufgabe erfindungsgemäß gelöst durch ein Verfahren zur Herstellung eines MOX-Kernbrennstoff-Pulvers, wobei:
- ein UO₂-haltiges Pulver, gewonnen aus einer Trockenkonversion gemäß Anspruch 1, und als weitere Ausgangspulver mindestens
- ein U₃O₈-haltiges Pulver, und
- ein ein weiteres Schwermetalloxid enthaltendes Pulver, bereit gestellt werden,
und wobei aus dem UO₂-haltigen Pulver und den weiteren Ausgangspulvern eine innige Pulvermischung hergestellt wird.

Dazu wird
- das UO₂-haltige Pulver bereits in ungemahlenem Zustand nach der Trockenkonversion rieselfähig bereit gestellt, und entweder
- zunächst mindestens eines der weiteren Ausgangspulver zu einer ersten Pulver-Mischung gemahlen, und danach das UO₂-haltige Pulver mit der ersten Pulver-Mischung zu der innigen Pulvermischung gemischt,
   oder
- zunächst mindestens eines der weiteren Ausgangspulver mit einem ersten Teil des UO₂-haltigen Pulvers zu einer ersten Pulver-Mischung gemahlen, und danach ein zweiter Teil des UO₂-haltigen Pulvers mit der ersten Pulver-Mischung zu der innigen Pulvermischung gemischt.

Hinsichtlich des Verfahrens zur Herstellung eines MOX-Kernbrennstoff-Sinterkörpers wird die Aufgabe erfindungsgemäß gelöst durch ein Verfahren zur Herstellung eines MOX-Kernbrennstoff-Sinterkörpers, wobei:
- ein UO₂-haltiges Pulver, gewonnen aus einer Trockenkonversion gemäß Anspruch 2 und als weitere Ausgangspulver mindestens
- ein U₃O₈-haltiges Pulver, und
- ein ein weiteres Schwermetalloxid enthaltendes Pulver, bereit gestellt werden,
   und wobei aus dem UO₂-haltigen Pulver und den weiteren Ausgangspulvern eine innige Pulvermischung hergestellt wird. Dazu wird
- das UO₂-haltige Pulver bereits in ungemahlenem Zustand nach der Trockenkonversion rieselfähig bereit gestellt, und entweder
- zunächst mindestens eines der weiteren Ausgangspulver zu einer ersten Pulver-Mischung gemahlen, und danach das UO₂-haltige Pulver mit der ersten Pulver-Mischung zu der innigen Pulvermischung gemischt,
   oder
- zunächst mindestens eines der weiteren Ausgangspulver mit einem ersten Teil des UO₂-haltigen Pulvers zu einer ersten Pulver-Mischung gemahlen, und danach ein zweiter Teil des UO₂-haltigen Pulvers mit der ersten Pulver-Mischung zu der innigen Pulvermischung gemischt.

Danach wird die innige Pulvermischung weiterbehandelt und zu Formkörpern verpresst und die Formkörper gesintert.

Im Unterschied zu bekannten Verfahren wird bei dem vorliegenden Verfahren zur Bereitstellung der innigen Pulvermischung also ein direkt nach der Trockenkonversion bereits in ungemahlenem Zustand rieselfähiges UO₂-haltiges Pulver bereit gestellt. Demnach ist es also entweder ausreichend mindestens eines der weiteren Ausgangspulver zu einer ersten Pulver-Mischung zu mahlen (wonach vorteilhaft ein Mahlvorgang für praktisch die gesamte Menge des UO₂-haltigen Pulvers entfällt) und danach das UO₂-haltige Pulver mit der ersten Pulver-Mischung zu der innigen Pulvermischung zu mischen.

Oder es ist ausreichend mindestens eines der weiteren Ausgangspulver mit einem ersten Teil des UO₂-haltigen Pulvers zu einer ersten Pulver-Mischung zu mahlen (wonach vorteilhaft ein Mahlvorgang für wenigstens die Menge eines zweiten Teils des UO₂-haltigen Pulvers entfällt) und danach einen zweiten Teil des UO₂-haltigen Pulvers mit der ersten Pulver-Mischung zu der innigen Pulvermischung zu mischen.

Beim Mischen der ersten Pulvermischung mit entweder der gesamten Menge des UO₂-haltigen Pulvers oder mit dem zweiten des Teil des UO₂-haltigen Pulvers ist nur ein geringer oder überhaupt kein Aufwand erforderlich, um eine innige Mischung der Pulver zu erstellen.

Damit entfallen vorteilhaft entweder für praktisch die gesamte Menge des UO₂-haltigen Pulvers oder wenigstens für einen Teil des UO₂-haltigen Pulvers, und damit für einen bedeutenden Anteil des MOX-Kernbrennstoff-Pulvers, ein Mahlvorgang sowie insbesondere weitere Homogenisierungs-Maßnahmen, die sich in der Regel als aufwendig erweisen.

Die Erfindung geht von der Erkenntnis aus, daß zur Erreichung einer ausreichenden Homogenität eines MOX-Kernbrennstoff- Pulvers und eines MOX-Kernbrennstoff-Sinterkörpers eine der wichtigsten Eigenschaften eines Pulvers seine Rieselfähigkeit ist.

Die Rieselfähigkeit eines Pulvers liegt vor allem in dem morphologischen Aufbau seiner Partikel begründet. Ein Pulver, dessen Partikel sphäroidförmig aufgebaut sind hat in der Regel gute Rieseleigenschaften.

Solch ein Pulver neigt kaum zu Verklumpungen und kaum zur Bildung von Agglomeraten. Ein rieselfähiges Pulver zeichnet sich durch eine homogene Partikelgröße aus und eine im Vergleich zu nicht rieselfähigen Pulvern gleichmäßige und hohe Schüttdichte.

Ein rieselfähiges Pulver weist also ausreichend homogene Eigenschaften auf. Vorteilhaft weist ein rieselfähiges Pulver auch bereits eine hohe Schüttdichte auf.

Ein rieselfähiges Pulver hat deshalb ein besonders gutes Untermischverhalten mit anderen Pulvern. Nach der obigen Erkenntnis ist dies eine wichtige Voraussetzung für die Herstellung einer innigen Pulvermischung zur Herstellung eines MOX-Kernbrennstoff-Pulvers und eines MOX-Kernbrennstoff-Pulvers mit homogenen Eigenschaften. Außerdem erleichtert dies erheblich den Verfahrensablauf zur Herstellung eines MOX-Kernbrennstoff-Pulvers. Dabei ist ein einfaches, gleichmäßig homogenes und, vorzugsweise bei hoher Schüttdichte, möglichst dichtes Einfüllen des Pulvers in eine Pressmatrize besonders vorteilhaft. Diese Vorteile wirken sich auch vorteilhaft auf die Homogenität und Dichte eines aus dem MOX-Kernbrennstoff-Pulver hergestellten Formkörpers und Sinterkörpers aus.

Damit unterscheidet sich das hier vorliegende Verfahren grundsätzlich von bisher bekannten trockenen Herstellungsverfahren für MOX-Kernbrennstoff-Pulver und MOX-Kernbrennstoff-Sinterkörper. Bisher übliche Verfahren verwenden nämlich mindestens zu einem bedeutenden Teil Pulver, welche in ungemahlenem Zustand nach der Konversion nur unzureichende Rieseleigenschaften haben. Solch ein Pulver hat üblicherweise einen nicht sphäroidförmigen Partikelaufbau, beispielsweise kantige oder sternförmige Partikel. Damit stellen sich nur sehr ungenügende Rieseleigenschaften ein. Solch ein Pulver neigt dann zu Verklumpungen und zur Bildung größerer Agglomerate, welche durch die Verkantung der Partikel eines solchen Pulvers zusammengehalten werden.

Solch ein Pulver mit schlechten Rieseleigenschaften muss deshalb in der Regel erheblichen Nachbehandlungen unterzogen werden bevor eine gute und homogene Mischung mit anderen Pulvern überhaupt erfolgreich sein kann. Dazu sind beispielsweise Mahlprozesse, in denen die genannten Pulveragglomerate bei einem nicht rieselfähigen Pulver zerschlagen werden und gleichzeitig eine Sphärodisierung oder wenigstens Homogenisierung eines Pulvers erreicht werden kann, geeignet.

Gemäß einer Weiterbildung der Erfindung wird die innige Pulvermischung mit 0 bis 25 Gew.%, insbesondere 10 bis 25 Gew.%, U₃O₈-haltigem Pulver hergestellt. Vorteilhaft dient das U₃O₈-haltige Pulver dabei als Porenbildner im MOX-Kernbrennstoff-Sinterkörper.

Vorteilhaft wird das U₃O₈-haltige Pulver zu einem überwiegenden Teil durch Oxidation eines UO₂-haltigen Pulvers hergestellt. Dabei handelt es sich also günstigerweise um sinteraktives U₃O₈, also noch nicht gesintertes sogenanntes grünes U₃O₈. Die Oxidation erfolgt günstigerweise an Luft bei 400°C-1000°C, vorzugsweise bei 400°C - 750°C, insbesondere bei etwa 450°C. Vorteilhaft wird das U₃O₈-haltige Pulver zu einem geringeren Teil aus Uranschrott oder Rücklaufmaterial hergestellt. Bei dem Rücklaufmaterial handelt es sich beispielsweise um Schleifschlamm, der beim Schleifen von Formkörpern oder Sinterkörpern anfällt. Dieses sogenannte schwarze U₃O₈ ist in der Regel nicht mehr sinteraktiv. Gegebenenfalls kann das U₃O₈-haltige Pulver auch zu überwiegendem Teil aus Uranschrott oder Rücklaufmaterial hergestellt sein.

Gemäß einer besonders vorteilhaften Ausgestaltung der Erfindung wird das U₃O₈-haltige Pulver mindestens zusammen mit dem weiteren Schwermetalloxid enthaltenden Pulver zu einer ersten Pulvermischung gemahlen. Entweder wird das U₃O₈-haltige Pulver nur zusammen mit dem weiteren Schwermetalloxid enthaltenden Pulver zu der ersten Pulvermischung gemahlen und danach wird diese erste Pulvermischung mit dem UO₂-haltigen Pulver zu der innigen Pulvermischung gemischt. Dabei entfällt günstigerweise ein Mahlvorgang für die gesamte Menge des UO₂-haltigen Pulvers.

Oder es wird bereits ein erster Teil des UO₂-haltigen Pulvers mit dem U₃O₈-haltigen Pulver und dem weiteren Schwermetalloxid enthaltenden Pulver zu der ersten Pulvermischung gemahlen und danach wird diese erste Pulvermischung mit dem zweiten Teil des UO₂-haltigen Pulvers zu der innigen Pulvermischung gemischt. Dabei entfällt günstigerweise ein Mahlvorgang für den zweiten Teil des UO₂-haltigen Pulvers.

In beiden zuletzt genannten Fällen wird vorteilhaft mit der Herstellung der ersten Pulvermischung eine nachhaltige Verbesserung der Rieselfähigkeit des U₃O₈-haltigen Pulvers und des ein weiteres Schwermetalloxid enthaltenden Pulvers erreicht. Im zuletzt genannten Fall wird bereits mit der ersten Pulvermischung eine rieselfähige und besonders innige Mischung der weiteren Ausgangspulver mit einem ersten Teil des rieselfähigen UO₂-haltigen Pulvers erreicht. Diese so gewonnene erste Pulvermischung lässt sich dann vorteilhaft besonders einfach mit dem zweiten Teil des rieselfähigen UO₂-haltigen Pulvers zu der innigen Pulvermischung mischen.

Besonders vorteilhaft wird als ein weiteres schwermetalloxidhaltiges Pulver ein PuO₂-haltiges Pulver verwendet. In dem Fall führt die Herstellung zu einem UO₂- und PuO₂-haltigen MOX-Kernbrennstoff-Pulver bzw. einem (U, Pu)O₂-haltigen MOX-Kernbrennstoff-Sinterkörper. Es kann auch vorteilhaft sein, alternativ zu einem PuO₂-haltigen Pulver oder zusätzlich dazu ein ThO₂-haltiges Pulver als weiteres schwermetalloxidhaltiges Pulver zu verwenden. Ein solches MOX-Kernbrennstoff-Pulver umfasst dann UO₂- und ThO₂-haltige Komponenten bzw. ein MOX-Kernbrennstoff-Sinterkörper (U, Th)O₂-haltige Komponenten. Ebenso kann ein solches MOX-Kernbrennstoff-Pulver UO₂-, PuO₂ und ThO₂-haltige Komponenten umfassen bzw. ein MOX-Kernbrennstoff-Sinterkörper (U, Pu, Th)O₂-haltige Komponenten. Insbesondere kann die innige Pulvermischung eine Verbindung aus der Gruppe bestehend aus: PuO₂, ThO₂, UO₂-ThO₂ und UO₂-PuO₂ enthalten.

Für einige Anwendungen erweist es sich als günstig, ein neutronengifthaltiges Pulver, insbesondere ein Gd₂O₃-haltiges Pulver, als weiteres Ausgangspulver zu verwenden. Günstigerweise ist dies bei Brennstoffen vorgesehen, die ein besonders hohes Abbrandpotential aufweisen. Dazu gehören beispielsweise Pulver mit hohen Anreicherungen des UO₂ bis zu 5% oder bei Anreicherungen oberhalb von 5%. Gd₂O₃ oder auch Bor entfaltet die Wirkung eines Neutronengifts. Damit lässt sich die Reaktivität eines Brennelements, insbesondere für Hochabbrand-Anwendungen (beispielsweise oberhalb von 50MWd/kgSM) über eine Vielzahl von Einsatzzyklen, insbesondere für mehr als 3 Einsatzzyklen regeln. Ein Neutronengift mindert nämlich die hohe Anfangs-Reaktivität bei einem besonders hoch angereicherten Brennelement zu Beginn seiner Einsatzzeit. Mit zunehmendem Abbrand eines solchen Brennelements verbraucht sich jedoch auch das Neutronengift, so daß die Reaktivität des Brennelements auf einem vergleichsweise gleichmäßigen Niveau erhalten bleibt. Die Wirkung des Neutronengifts besteht also im Wesentlichen in einer Nivellierung der Reaktivität eines hoch angereicherten Brennelements, insbesondere zu Beginn seiner Einsatzzeit.

Vorteilhaft können auch weitere Pulver und/oder Zusätze bereits mit dem Mahlvorgang für die erste Pulvermischung oder beim Mischen zur innigen Pulvermischung zugesetzt werden. Beispielsweise kann es vorteilhaft sein, die Wärmeleitfähigkeit eines Brennstoffs beeinflussende Stoffe, wie Beryllium oder Molybdän, in Pulverform zuzusetzen.

Vorteilhafte Weiterbildungen der Erfindung insbesondere hinsichtlich der Bereitstellung und Weiterbehandlung einer innigen Pulvermischung sind den Unteransprüche 7 bis 15 zu entnehmen.

Für den Fall, daß zur Erstellung der ersten Pulvermischung eines der weiteren Ausgangspulver bereits mit einem ersten Teil des UO₂-haltigen Pulvers gemahlen wird macht vorteilhaft der zweite Teil des UO₂-haltigen Pulvers einen bedeutenden Teil des UO₂-haltigen Pulvers aus. Es erweist sich insbesondere als vorteilhaft, daß die Menge des zweiten Teils des UO₂-haltigen Pulvers die Menge des ersten Teils des UO₂-haltigen Pulvers übersteigt. Es wird somit vorteilhafterweise die größere Menge des UO₂-haltigen Pulvers am Mahlvorgang vorbeigeführt und lediglich die kleinere Menge des UO₂-haltigen Pulvers einem Mahlvorgang zugeführt. Damit entfallen vorteilhafterweise für einen größeren Teil des UO₂-haltigen Pulvers, und damit für einen bedeutenden Anteil des MOX-Kernbrennstoff-Pulvers, ein Mahlvorgang sowie insbesondere weitere Homogenisierungs-Maßnahmen, die sich in der Regel als aufwendig erweisen.

Dazu macht besonders vorteilhaft die Menge des ersten Teils des UO₂-haltigen Pulvers etwa 50-30% der Gesamtmenge des UO₂-haltigen Pulvers und die Menge des zweiten Teils des UO₂-haltigen Pulvers entsprechend etwa 50-70% der Gesamtmenge des UO₂-haltigen Pulvers, aus.

Bei einer besonders vorteilhaften Weiterbildung der Erfindung wird praktisch kein bzw. nur eine unerhebliche Menge des UO₂-haltigen Pulvers gemahlen.

Im Rahmen einer bevorzugten Weiterbildung der Erfindung wird die innige Pulvermischung nochmals einem Mischvorgang unterworfen, wodurch es zu einer Aufbaugranulation kommt. Dadurch wird die Schüttdichte der innigen Pulvermischung auf besonders einfache Weise erhöht. Vor dem nochmaligen Mischvorgang kann es zur Unterstützung der Aufbaugranulation vorteilhaft sein, die innige Pulvermischung zu sieben. Gegebenenfalls können auch weitere vorbereitende Maßnahmen zur Unterstützung der Aufbaugranulation beim Mischen vorgesehen sein.

Im Rahmen einer weiteren bevorzugten Weiterbildung der Erfindung wird zur Erhöhung der Schüttdichte der zweite Teil des UO₂-haltigen Pulvers zu Granulen granuliert und/oder kompaktiert bevor er mit der ersten Mischung zu der innigen Pulvermischung gemischt wird. Dies hat den Vorteil, daß der zweite Teil des UO₂-haltigen Pulvers bereits mit einer durch Granulierung erhöhten Schüttdichte zum Mischen mit der ersten Pulvermischung zur innigen Pulvermischung bereitgestellt wird.

Im Rahmen noch einer weiteren bevorzugten Weiterbildung der Erfindung wird zur Erhöhung der Schüttdichte die innige Pulvermischung zu Granulen granuliert und/oder kompaktiert. Die beiden vorgenannten Weiterbildungen haben den Vorteil, daß die innige Pulvermischung mit einer durch Granulierung erhöhten Schüttdichte für den Pressvorgang bereitgestellt wird.

Ein Granulierungs- oder Kompaktierungsvorgang erhöht die Schüttdichte eines Pulvers, indem bei den Partikeln des Pulvers die Partikelgröße verringert wird. Die granulierten bzw. kompaktierten kleineren Partikel erlauben somit eine dichtere Schüttung des Pulvers im Vergleich zu einem Pulver mit nicht granulierten bzw. nicht kompaktierten größeren Partikel. Es hat sich als vorteilhaft erwiesen, die Granulen mit einer Größe von im Mittel weniger als 2mm, herzustellen. Besonders vorteilhaft ist eine Granulengröße von 0.1-lmm. Eine derartig reduzierte Granulengröße führt bereits zu einer Schüttdichte der innigen Pulvermischung, die weitere Maßnahme zu Erhöhung der Schüttdichte beim Pressen wenn nicht überflüssig, so doch zumindest einfacher machen. Es hat sich als besonders vorteilhaft erwiesen, die Granulen so herzustellen, daß das Pulver eine Schüttdichte von etwa 2,0-2,2 g/cm³ aufweist.

Nach einer weiteren Erkenntnis ist nämlich, neben einer guten Rieselfähigkeit, insbesondere eine ausreichend hohe Schüttdichte eines Pulvers für die weitere Verarbeitung zu einem Formkörper bzw. Sinterkörper von Bedeutung. Ein Pulver soll nämlich eine ausreichend hohe Schüttdichte aufweisen, damit eine ausreichend hohe Dichte des Formkörpers gewährleistet ist, möglichst ohne daß weitere Maßnahmen beim Pressvorgang zur Erhöhung der Dichte des Formkörpers vorgenommen werden müssen. Die Dichte des Formkörpers ist wiederum für die schließliche Dichte des Sinterkörpers ausschlaggebend, welche durch den Sintervorgang in einen günstigen Bereich geführt werden soll.

Zur Weiterbehandlung der innigen Pulvermischung hat es sich als vorteilhaft erwiesen, wenn diese einem oder mehreren der Prozessschritte aus der Gruppe bestehend aus: Sieben, Mischen und Sphärodisieren, unterzogen wird. Auf diese Weise können gegebenenfalls die bereits guten Rieseleigenschaften und die Schüttdichte der innigen Pulvermischung noch weiter verbessert werden.

Des weiteren kann es von Vorteil sein, der innigen Pulvermischung ein Additiv aus der Gruppe bestehend aus: Dotierstoff, Neutronengift, Mahlhilfsmittel, Schmiermittel, Porenbildner und Presshilfsmittel, zuzugeben.

Dotierstoffe dienen insbesondere zur Einstellung einer vorteilhaften Korngröße des Sinterkörpers beim Sinterprozess. Über die Korngröße kann unter anderem die Plastizität und die Spaltgasrückhaltung eines Sinterkörpers vorteilhaft verbessert werden. Als Dotierstoffe eignen sich unter anderem Zugaben von Oxiden, Silikaten oder anderen Verbindungen insbesondere von Fe, Cr, Nb, Al, Si, Mg und Ti. Als Neutronengift kann außer einer Gadolinium oder einer Gadolinium-Verbindung auch Bor oder eine Bor-Verbindung vorteilhaft sein.

Weitere Stoffe wie Beryllium, Molybdän oder Erbium eignen sich unter anderem zur Verbesserung der Wärmeleitungseigenschaften eines Sinterkörpers. Schmiermittel-Zugaben verbessern vorteilhaft die Handhabe eines Pulvers bei der Verarbeitung, insbesondere zur Herstellung eins Sinterkörpers. Sie erleichtern beispielsweise das Einfüllen des Pulvers in Pressmatrizen für den Pressvorgang zu Formkörpern. Als besonders vorteilhaft hat sich dabei die Verwendung von Stearaten erwiesen, insbesondere Al-Stearat und/oder ein Zn-Stearat.

Vorteilhafte Weiterbildungen der Erfindung insbesondere hinsichtlich der weiteren Verarbeitung der innigen Pulvermischung zu einem MOX-Kernbrennstoff-Sinterkörper sind den Unteransprüche 16 bis 19 zu entnehmen.

Zum Pressen wird die innige Pulvermischung nach und nach in eine Pressmatrize eingefüllt. Die innige Pulvermischung kann gegebenenfalls mit einem Pressweg von bis zu 10cm zu einem Formkörper verpresst werden, soweit die Schüttdichte der innigen Pulvermischung bereits ausreichend hoch ist. Zur Erreichung einer besonders hohen Dichte beim Formkörper ist es gemäß einer bevorzugten Weiterbildung der Erfindung vorteilhaft die innige Pulvermischung in eine Pressmatrize einzufüllen und über einen 10cm übersteigenden, insbesondere um 10-30% übersteigenden Pressweg zu Formkörpern zu verpressen. Dazu wird eine entsprechend verlängerte Pressmatrize, in die das Pulver eingefüllt wird, zur Verfügung gestellt.

Zur Erreichung einer besonders hohen Dichte beim Formkörper ist es wahlweise gemäß einer weiteren bevorzugten Weiterbildung der Erfindung auch vorteilhaft, die innige Pulvermischung in eine Pressmatrize unter Vibration der Pressmatrize einzufüllen und anschließend zu einem Formkörper zu verpressen. Eine vibrierende Pressmatrize bewirkt eine Verdichtung des Pulvers beim Einfüllen. Diese Maßnahme kann also zusätzlich oder alternativ zur vorgenannten Erhöhung des Presswegs vorgenommen werden.

Zur Erreichung einer besonders hohen Dichte beim Formkörper ist es wahlweise gemäß noch einer weiteren bevorzugten Weiterbildung der Erfindung auch vorteilhaft, die innige Pulvermischung in eine Pressmatrize einzufüllen und mittels Sequenzpressen zu Formkörpern zu verpressen. Dabei wird ein Teil der innigen Pulvermischung also in eine Pressmatrize eingefüllt, anschließend gepresst, anschließend nochmals innige Pulvermischung nachgefüllt und nochmals gepresst. Dieser als Sequenzpressen bezeichnete abwechselnde Einfüll- und Pressvorgang kann entsprechend ausgeführt und sequentiell solange fortgesetzt werden, bis eine ausreichende Dichte bei einem Formkörper erreicht ist.

Wenn die Schüttdichte der innigen Pulvermischung noch nicht ausreichend hoch sein sollte, so kann auf die vorgenannten Maßnahmen eine ausreichende Dichte der innigen Pulvermischung in der Pressmatrize erreicht werden. Die vorgenannten Maßnahmen können sich selbst dann als vorteilhaft erweisen, wenn die Schüttdichte der innigen Pulvermischung bereits ausreichend hoch sein sollte. Beispielsweise kann ein trockenkonvertiertes rieselfähiges Pulver mit ausreichend hoher Schüttdichte direkt nach der Trockenkonversion oder nach einem zusätzlichen Mischvorgang zur Bewirkung einer Aufbaugranulation, nach einem der oben genannten Granulierungs- bzw. Kompaktierungsvorgänge bereit gestellt werden. Die Dichte der innigen Pulvermischung in der Pressmatrize kann durch eine Presswegerhöhung, eine Vibration der Pressmatrize und/oder einem Sequenzpressen noch weiter erhöht werden, so daß eine besonders hohe Dichte beim Formkörper und beim schließlichen Sinterkörper erreichbar ist.

Ein Formkörper weist vorteilhaft eine sogenannte Grünlingsdichte von 6,0.-6,3 g/cm³ auf.

Günstigerweise werden die Formkörper in einer Gasatmosphäre umfassend wenigstens Wasserstoff und Stickstoff insgesamt etwa 14 Std. und davon bei einer Sintertemperatur im Bereich von 1600°C-1900°C etwa 1-4 Std. gesintert.

Günstigerweise beträgt eine Haltezeit bei etwa 1780°C etwa 2-3Std.

Dabei verdichtet sich der Formkörper auf eine Sinterdichte von etwa 10,3-10,55 g/cm³. Im Übrigen bewirkt das Sintern das bereits erwähnte Kornwachstum in der UO₂-Matrix.

Beim Sintern schrumpft der Formkörper um etwa 45% seines ursprünglichen Volumens. Dabei schließen sich etwaige Porenkanäle, die durch das Austreiben flüchtiger Bestandteile erzeugt wurden. Gegebenenfalls bleibt aber auch eine durch eine Zugabe von Porenbildner zum Pulver vorbestimmte Porendichte erhalten. Die Zugabe von Porenbildner kann also vorteilhaft zur Einstellung einer Sinterdichte beim Sinterkörper dienen. Derartige Poren können eine Größe von bis zu 100µm aufweisen. Besonders vorteilhaft ist eine Porengröße von 5-6µm. Weiterhin entstehen Poren auch durch die Reduktion von U₃O₈ zu UO₂. Derartige Poren weisen eine Größe von vorteilhaft weniger als 2µm auf. Vorteilhaft entsteht also durch die Verwendung eines Porenbildners und U₃O₈-haltigem Pulver für eine innige Pulvermischung eine im Wesentlichen mono-modale Porenstruktur beim Sinterkörper mit einem Porengrößen-Schwerpunkt, der zwischen 1 bis 10µm liegt. Wahlweise kann jedoch auch ein Porenbildner verwendet werden, der Poren mit einer Größe zwischen 10-100µm beim Sintern erzeugt, so daß nach dem Sintern eine bi-modale Porenstruktur beim Sinterkörper vorliegt, vorteilhaft mit einem ersten Porengrößen-Schwerpunkt zwischen 1-10µm und einem zweiten Größen-Schwerpunkt zwischen 10-40µm. Eine solche Porenstruktur hat eine Reihe von Vorteilen u. a. hinsichtlich des Nachsinterverhaltens und der Spaltgasrückhaltung eines Sinterkörpers im Reaktoreinsatz.

Nach dem Sintern wird ein Sinterkörper zur Entfernung von Rauhigkeiten und Graten geschliffen, so daß eine für die Hüllrohrbefüllung geeignete, vorteilhaft passgenaue Größe des Sinterkörpers eingestellt wird. Der dabei entstehende Schleifschlamm kann als Uranschrott bzw. Rücklaufmaterial wie oben genannt wieder einer Pulvermischung, insbesondere der ersten oder der innigen Pulvermischung, zugeführt werden.

Gemäß einer ganz besonders bevorzugten Weiterbildung der Erfindung hat es sich als vorteilhaft erwiesen, weitere Maßnahmen bei der Trockenkonversion zur Herstellung von UO₂-haltigem Pulver hinsichtlich einer weiteren Erhöhung der Rieselfähigkeit und vorzugsweise auch der Schüttdichte des UO₂-haltigen Pulvers bereits direkt nach der Trockenkonversion vorzusehen. Diese sind insbesondere den Unteransprüchen 20 bis 24 zu entnehmen.

Vorteilhaft wird dazu bei der Trockenkonversion oder einem anderen direkten Konversionsverfahren UF₆ über UO₂F₂ nahezu vollständig in einem einzigen Verfahrensschritt in rieselfähiges UO₂-haltiges Pulver umgesetzt. Der Verfahrensschritt läuft insbesondere unter Beteiligung einer Gasphasenreaktion und einer Wirbelbettreaktion ab. Die Partikel des dabei entstehenden UO₂-haltigen Pulvers weisen also einen morphologischen Aufbau auf, der dem UO₂-haltigen Pulver bereits in ungemahlenem Zustand Rieselfähigkeit verleiht.

Die Rieselfähigkeit des UO₂-haltigen Pulvers wird dabei gemäß der Weiterbildung im Wesentlichen durch die Prozessparameter des einzigen Verfahrensschritts eingestellt.

Der einzige Verfahrensschritt läuft dazu vorzugsweise in einem einzigen Reaktionsbehälter, wobei die Gasphasenreaktion in einem ersten, vorzugsweise oberen, Bereich und die Wirbelbettreaktion in einem zweiten, vorzugsweise unteren, Bereich des Reaktionsbehälters abläuft.

Dazu wird vorzugsweise gasförmiges UF₆ (Uranhexafluorid in der gasförmigen Phase) mengengeregelt dem oberen Teil des Reaktionsbehälters zugeführt und reagiert mit ebenfalls zugeführtem überhitzten Wasserdampf exotherm, unter Abgabe von Wärme, in der Gasphasenreaktion gemäß:

UF₆ + 4H₂O → UO₂F₂ + 4HF +2H₂O

Dabei weist das feste UO₂F₂ Primärpartikel im sub-µm-Bereich auf. Besonders vorteilhaft wird die Schüttdichte des UO2-haltigen Pulvers, das hier zunächst als UO₂F₂-Pulver vorliegt, nach dem einzigen Verfahrensschritt durch einen vergleichsweise langsamen Aufbau der Partikel des UO₂-haltigen Pulvers, das hier zunächst als UO₂F₂-Pulver vorliegt, in der Gasphasenreaktion erhöht. Die Dichte der Partikel in der Gasphasenreaktion liegt dabei im Bereich von etwa 0.05-0.1 g/cm³ oder darüber.

Das so entstehende UO₂F₂-Pulver (Uranyldifluorid)) fällt vorteilhafterweise in ein Wirbelbett, in dem es unter Einblasen von vorzugsweise N₂, H₂ und Dampf als Prozessgase endotherm bei etwa 600°C zu festem UO₂-Pulver und flüchtiger Flusssäure umgesetzt wird:

UO₂F₂ +H₂ → UO₂ + 2HF

Das so entstehende UO2-haltige Pulver weist günstigerweise eine Partikelgröße zwischen 1-1000µm auf.

Gemäß einer besonders vorteilhaften Ausgestaltung der Erfindung wird das UO₂-haltige Pulver im Mittel mit einer Partikelgröße von etwa 80µm gewonnen. Diese auf die genannte Weise im einzigen Verfahrensschritt eingestellte Partikelgröße ist zusammen mit der hohen Rieselfähigkeit von besonders vorteilhafter Wirkung zur Erreichung eines guten Untermischverhaltens des ein weiteres Schwermetalloxid enthaltenden Pulvers unter das UO₂-haltige Pulver beim Erstellen der innigen Pulvermischung und/oder gegebenenfalls bereits beim Erstellen der ersten Pulvermischung. Günstigerweise wird dadurch eine besonders homogene Verteilung eines ein weiteres Schwermetalloxid enthaltenden Pulvers und des UO₂-haltige Pulvers untereinander beim Erstellen der innigen Pulvermischung erreicht. Insbesondere gilt dies bei der Verwendung eines PuO₂-haltigen Pulvers als das weiter schwermetallhaltige Pulver.

Dabei wird das UO₂-haltige Pulver besonders vorteilhaft bereits mit einer relativ hohen Schüttdichte oberhalb von etwa 1,4g/cm³ gewonnen. Dies hat den Vorteil, daß weitere Maßnahmen zur Erhöhung der Schüttdichte wenn nicht überflüssig so doch erheblich vereinfacht werden. Jedenfalls können weitere Maßnahmen zu einer weiteren Erhöhung der Schüttdichte vorteilhaft genutzt werden.

Das UO₂-haltige Pulver kann direkt nach dem einzigen Verfahrensschritt noch einen Rest-Fluorgehalt im Bereich von etwa 5000-10000ppm aufweisen. Vorteilhaft ist deshalb dem Reaktionsbehälter ein Drehrohrofen nachgeschaltet, in dem das UO₂-haltige Pulver direkt nach dem einzigen Verfahrensschritt einer Restdefluorisierung unterworfen wird. Die Restdefluorisierung läuft günstigerweise bei einer Temperatur von etwa 700°C unter Verwendung eines Prozessgasgemisches, umfassend wenigstens Stickstoff, Wasserstoff und Wasserdampf, ab.

Gemäß einer besonders bevorzugten Ausgestaltung der Erfindung ist das UO₂-haltige Pulver bereits in ungemahlenem Zustand rieselfähig und wird mit
- einem O/U-Verhältnis von 2,03-2,0,
- einem U-Gehalt von mehr als 87,4 Gew.% U,
- einer Schüttdichte von 1,4-1,8g/cm³
- einer spez. Oberfläche von 2,3-3,0m²/g,
- einer Feuchte weniger als 0,15 Gew.% H₂O,
- einem Fluorgehalt von weniger als 20ppm Fluor
bereit gestellt.

Anhand einer Zeichnung werden vorteilhafte Ausführungsformen der Erfindung näher erläutert. Die Figuren zeigen in schematischer Darstellung:
- Fig. 1: die Verfahrensabläufe a) und b) von bisher bekannten trockenen Herstellungsverfahren für Mischoxid-Kernbrennstoff-Sinterkörper,
- Fig. 2: eine vorteilhafte Ausführungsform der Erfindung, eines Verfahrens zur Herstellung eines Mischoxid-Kernbrennstoff-Sinterkörpers unter Verwendung von trockenkonvertiertem, rieselfähigem UO₂-haltigem Pulver,
- Fig. 3: weitere günstige Ausführungsformen der Erfindung, eines Verfahrens zur Herstellung eines Mischoxid-Kernbrennstoff-Sinterkörpers, unter Verwendung von trockenkonvertiertem, rieselfähigem UO₂-haltigem Pulver, bei dem etwa 40% des U02-haltigen Pulvers einem Mahlvorgang unterworfen werden, und
a) bei dem die anderen etwa 60% des UO₂-haltigen Pulvers an einem Mahlvorgang vorbeigeführt und einem Vormischen unterworfen werden,
b) bei dem die anderen etwa 60% des UO₂-haltigen Pulvers zunächst granuliert und dann an einem Mahlvorgang vorbeigeführt und einem Mischvorgang unterworfen werden,
c) bei dem die anderen etwa 60% des UO₂-haltigen
Pulvers an einem Mahlvorgang vorbeigeführt und direkt einem Mischvorgang unterworfen werden.

Bei allen bisher bekannten trockenen Verfahren zur Herstellung eines MOX-Kernbrennstoff-Pulvers und eines MOX-Kernbrennstoff-Sinterkörpers wird UO₂-haltiges Pulver aus einer Trockenkonversion verwendet, welches nach der Konversion in ungemahlenem Zustand nicht rieselfähig ist. U. a. bekannt ist beispielsweise ein Verfahren unter dem Namen Integrated Dry Route. Die aus der Konversion gewonnenen und gegebenenfalls angemischten Pulver sind nicht homogen, sondern weisen Agglomerate auf. Deswegen ist für 100% des Gesamtmassenstroms ein Mahlvorgang notwendig.

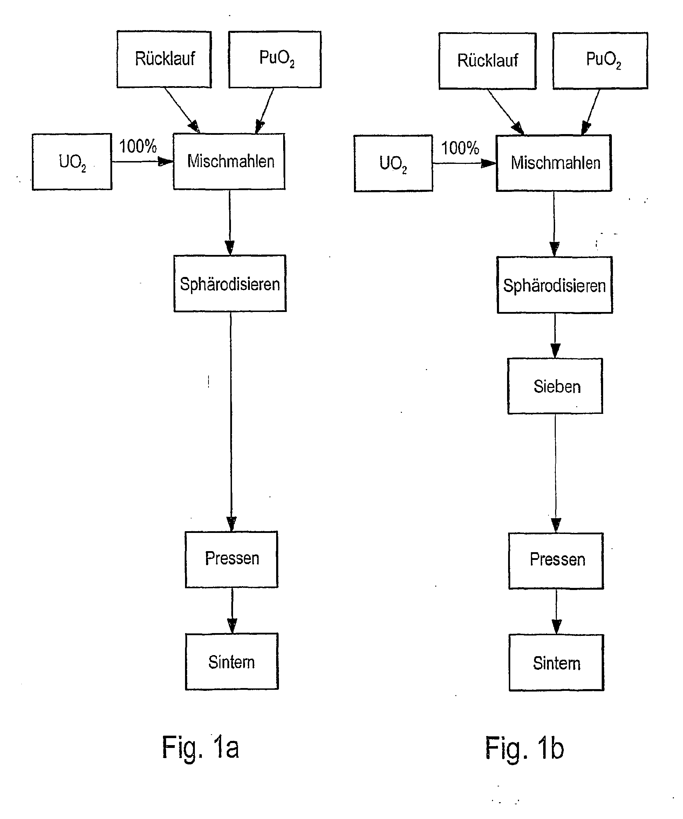

Gemäß der Fig. 1 wird die Gesamtmenge des UO₂-haltigen Pulvers, des PuO₂-haltigen Pulvers und des Rücklaufmaterials, gemischt und dann gemahlen oder einem Mischmahl-Vorgang unterzogen, bei dem die Pulver gleichzeitig gemischt und gemahlen werden. Den gesamten Massenstrom des UO₂-haltigen Pulvers einem Mahl- oder Mischmahl-Vorgang zuzuführen bedeutet einen erheblichen Aufwand beim Herstellungsprozess. Gegebenenfalls müssen weitere Verfahrensschritte folgen, um die Pulverpartikel geeignet zu formen. Gemäß Fig. 1a muss eine bei den bekannten Verfahren vorhandene zackige oder sternförmige Gestalt der Pulverpartikel in einem Sphärodisierungsschritt beseitigt werden. Dabei werden die Pulverpartikel sphärisch ausgebildet.

Zum Aussieben von Pulveragglomeraten ist gemäß Fig. 1b ein Siebeschritt vorgesehen. Die genannten Folgeschritte Sphärodisieren und Sieben sind für nicht rieselfähige Pulver notwendig. Insbesondere das Sphärodisieren bedeutet einen erheblichen Aufwand beim Herstellungsprozess.

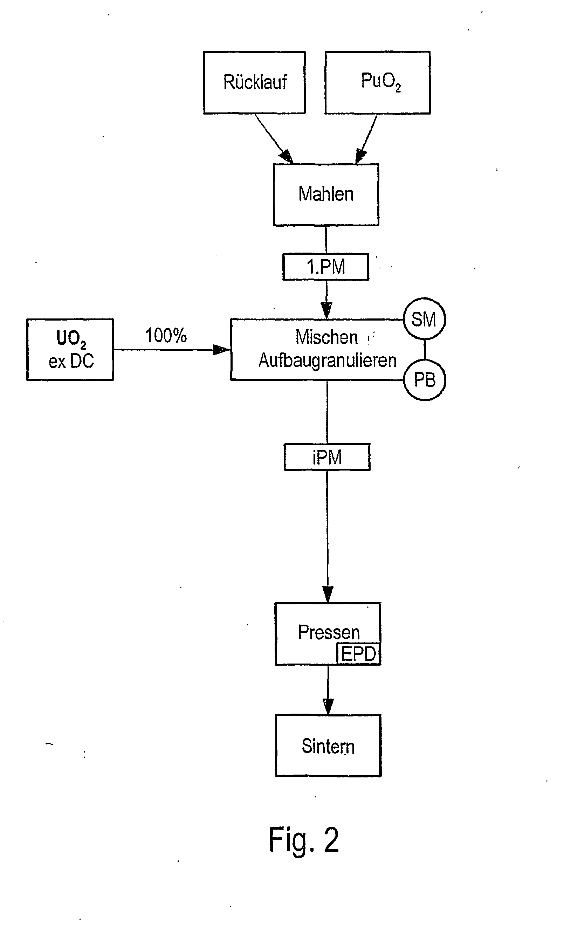

Bei der in Fig. 2 gezeigten Ausführungsform der Erfindung wird zur Herstellung eines MOX-Kernbrennstoffpulver praktisch die gesamte Menge des UO₂-haltigen Pulver aus der Trockenkonversion direkt einem Mischvorgang zugeführt, da das UO₂-haltige Pulver bereits in ungemahlenem Zustand rieselfähig ist. Dazu wird ein UO₂-haltiges Pulver, gewonnen aus einer Trockenkonversion oder einem anderen direkten Konversionsverfahren gewonnen, und als weitere Ausgangspulver ein im Wesentlichen aus Rücklaufmaterial gewonnenes U₃O₈-haltiges Pulver, und ein PuO₂-haltiges Pulver, bereitgestellt.

Zunächst wird aus dem Rücklaufmaterial (im Wesentlichen U₃O₈-haltiges Pulver) und PuO₂-haltigem Pulver eine erste Pulvermischung (1.PM) in einem Mahlvorgang hergestellt. Dabei entsteht bereits eine homogene und innige Mischung aus U₃O₈-haltigem Pulver und PuO₂-haltigem Pulver. Der Mahlschritt beschränkt sich also auf das PuO₂-haltige Pulver und das Rücklaufmaterial. Die Gesamtmenge des UO₂-haltigen Pulvers wird anschließend mit der ersten Pulver-Mischung zu einer innigen Pulvermischung (iPM) gemischt. Beim Mischvorgang kommt es dabei vor allem bereits zu einer ausreichenden Aufbaugranulation der Partikel, d.h. die zunächst locker aneinander liegenden Partikel des Pulvers bilden beim Mischen bereits festere Granulen, was zu einer Erhöhung der Schüttdichte des Pulvers führt. Auf besonders einfache Weise lassen sich bereits beim Mischvorgang Schmiermittel (SM) und Porenbildner (PB) sowie gegebenenfalls nicht in Fig. 1 gezeigte Zusätze wie Dotierstoffe u.a. dem Pulver zugeben.

Anschließend wird die so entstehende innige Pulvermischung (iPM) einem Pressvorgang zugeführt. Beim Pressen wird innige Pulvermischung (iPM) in eine Pressmatrize eingefüllt und zu Formkörpern verpresst. Sollte es zweckmäßig sein, die im Mischvorgang durch die Aufbaugranulation eingestellte Schüttdichte der innigen Pulvermischung (iPM) noch weiter zu erhöhen so sind beim Pressen weitere Maßnahmen zur Erhöhung der Pressdichte (EPD) vorgesehen. Dazu ist wahlweise oder in Kombination eine Erhöhung des Presswegs, ein Vibration der Pressmatrize oder ein Sequenzpressen vorgesehen.

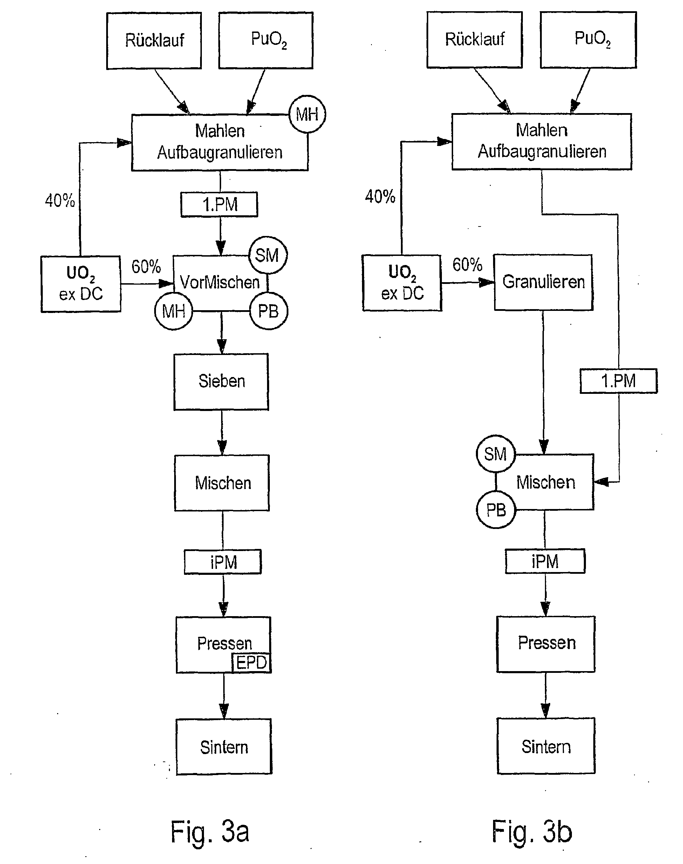

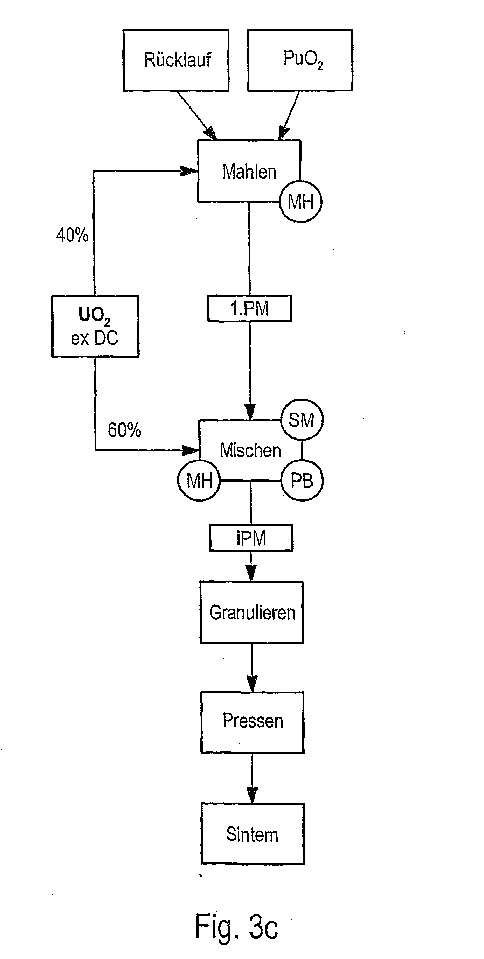

Bei den in Fig. 3 gezeigten Ausführungsformen der Erfindung zur Herstellung eines MOX-Kernbrennstoffpulver wird nicht wie bei der in Fig. 2 gezeigten Ausführungsform die Gesamtmenge des UO₂-haltigen Pulvers sondern ein Großteil des UO₂-haltigen Pulvers direkt einem Vormisch- oder direkt einem Mischvorgang zugeführt, so daß dieser Großteil des Pulvers nicht gemahlen werden muss. Weiter sind bei den Ausführungsformen der Figuren 3a, 3b und 3c unterschiedliche Maßnahmen zur Erhöhung der Schüttdichte der innigen Pulvermischung (iPM) vorgesehen.

Bei der in Fig. 3a gezeigten Ausführungsform werden Pulver wie in Fig. 2 bereitgestellt. Zunächst wird aus Rücklaufmaterial oder im Wesentlichen U₃O₈-haltigem Pulver, aus PuO₂-haltigem Pulver und etwa 40% der Menge des UO₂-haltigen Pulvers, also eines ersten Teils des UO₂-haltigen Pulvers, eine erste Pulvermischung (1.PM) in einem Mahlvorgang hergestellt. Dabei entsteht bereits eine homogene und innige Mischung des im Wesentlichen aus Rücklaufmaterial gewonnenen U₃O₈-haltigen Pulvers, des PuO₂-haltigen Pulvers und einem bedeutenden Teil des UO₂-haltigen Pulvers. Des weiteren kommt es bereits beim Mahlvorgang zu einer Aufbaugranulation bei den beteiligten Pulvern. Dies hat den Vorteil, daß die so hergestellte erste Pulvermischung (1.PM) bereits mit einer relativ hohen Schüttdichte vorliegt. Des weiteren ist es vorteilhaft beim Mahlvorgang ein Mahlhilfsmittel zuzusetzen.

60% der Gesamtmenge des UO₂-haltigen Pulvers, also ein zweiter Teil des UO₂-haltigen Pulvers, wird anschließend mit der ersten Pulver-Mischung (1.PM) zunächst in einem Vormischvorgang zu einer Pulvermischung gemischt, die bereits sehr homogen ist und von ihren Eigenschaften her eine innige Mischung darstellt. Es ist vorgesehen beim Vormischen dieser Mischung Schmiermittel, Porenbildner und Mahlhilfsmittel zuzusetzen. Zur weiteren Verbesserung der Eigenschaften der Mischung wird bei der Ausführungsform der Fig. 3a diese Pulvermischung gesiebt und nochmals gemischt, so daß danach eine besonders homogene und innige Pulvermischung (iPM) vorliegt. Durch das Vormischen und das nochmalige Mischen der Pulver wird auf besonders einfache Weise, nämlich durch eine beim Vormischen und nochmaligen Mischen stattfindende Aufbaugranulation, die Schüttdichte der innigen Pulvermischung (iPM) erhöht. Diese wird anschließend zu Formkörpern gepresst. Weitere Maßnahme zur Erhöhung der Pressdichte (EPD), wie wahlweise oder in Kombination eine Erhöhung des Presswegs, ein Vibration der Pressmatrize oder ein Sequenzpressen sind in diesem Fall vorgesehen. Die Formkörper werden anschließend gesintert.

Bei der in Fig. 3b gezeigten Ausführungsform wird das UO₂-haltige Pulver vor dem Mischen mit der ersten Pulvermischung (1.PM) einem Granulierungsvorgang zugeführt. Der Großteil (60%) des UO₂-haltigen Pulvers wird also zunächst granuliert bevor er mit anderen schwermetalloxidhaltigem Pulver gemischt wird. Dadurch wird bereits für die größte Menge des Pulvers eine ausreichend hohe Schüttdichte eingestellt. Mehrere oder entsprechend lange Mischvorgänge, wie beispielsweise in Fig. 3a, können deshalb entfallen. Beim Mischen zur innigen Pulvermischung (iPM) ist wiederum die Zugabe von Schmiermittel (SM) und Porenbildner (PB) vorgesehen. Ein Mahlvorgang entfällt wiederum vorteilhaft für den Großteil des Pulvers.

Die innige Pulvermischung (iPM) weist durch den Granulierungsvorgang für das UO₂-haltige Pulver bei dieser Ausführungsform bereits eine ausreichend hohe Schüttdichte auf, so daß weitere Maßnahmen zur Erhöhung der Pressdichte beim Pressen (EPD) entfallen können, jedoch nicht entfallen müssen. Die innige Pulvermischung (iPM) wird zu Formkörpern gepresst, die anschließend gesintert werden.

Bei der in Fig. 3c gezeigten Ausführungsform wird zunächst aus dem Rücklaufmaterial oder im Wesentlichen U₃O₈-haltigem Pulver, aus PuO₂-haltigem Pulver und etwa 40% der Menge des UO₂-haltigen Pulvers , also eines ersten Teils des UO₂-haltigen Pulvers, eine erste Pulvermischung (1.PM) in einem Mahlvorgang hergestellt. Anstatt mehrere Mischvorgänge vorzusehen wie in Fig. 3a oder 60% des UO₂-haltigen Pulvers einem Granulierungsvorgang zuzuführen wie in Fig. 3b, wird bei der in Fig. 3c gezeigten Ausführungsform die gesamte innige Pulvermischung (iPM) nach dem Mischen einem Granulierungsvorgang zugeführt. Die innige Pulvermischung (iPM) weist durch den Granulierungsvorgang bei dieser Ausführungsform bereits eine ausreichend hohe Schüttdichte auf, so daß weitere Maßnahmen zur Erhöhung der Pressdichte beim Pressen (EPD) entfallen können, jedoch nicht entfallen müssen.

Die innige Pulvermischung (iPM) wird zu Formkörpern gepresst, die anschließend gesintert werden.

## Patentansprüche

1. Verfahren zur Herstellung eines MOX-Kernbrennstoff-Pulvers, wobei:
- ein UO₂-haltiges Pulver, gewonnen aus einer Trockenkonversion, bei der UF₆ über UO₂F₂ nahezu vollständig in einem einzigen Verfahrensschritt unter Beteiligung einer Gasphasenreaktion und einer Wirbelbettreaktion in UO₂-haltiges Pulver umgesetzt wird, wobei die Partikel des UO₂-haltigen Pulvers in der Gasphasenreaktion derart langsam aufgebaut werden, dass das UO₂-haltige Pulver bereits in ungemahlenem Zustand rieselfähig und mit einer Schüttdichte oberhalb von etwa 1,4g/cm³ aus der Trockenkonversion gewonnen wird, und als weitere Ausgangspulver mindestens
- ein U₃O₈-haltiges Pulver, und
- ein ein weiteres Schwermetalloxid enthaltendes Pulver, bereit gestellt werden, und wobei aus dem UO₂-haltigen Pulver und den weiteren Ausgangspulvern eine innige Pulvermischung hergestellt wird, und entweder
- zunächst mindestens eines der weiteren Ausgangspulver zu einer ersten Pulver-Mischung gemahlen wird, und danach das UO₂-haltige Pulver mit der ersten Pulver-Mischung zu der innigen Pulvermischung gemischt wird, oder
- zunächst mindestens eines der weiteren Ausgangspulver mit einem ersten Teil des UO₂-haltigen Pulvers zu einer ersten Pulver-Mischung gemahlen wird, und danach ein zweiter Teil des UO₂-haltigen Pulvers mit der ersten Pulver-Mischung zu der innigen Pulvermischung gemischt wird.

2. Verfahren zur Herstellung eines MOX-Kernbrennstoff-Sinterkörpers, wobei:
- ein UO₂-haltiges Pulver, gewonnen aus einer Trockenkonversion, bei der UF₆ über UO₂F₂ nahezu vollständig in einem einzigen Verfahrensschritt unter Beteiligung einer Gasphasenreaktion und einer Wirbelbettreaktion in UO₂-haltiges Pulver umgesetzt wird, wobei die Partikel des UO₂-haltigen Pulvers in der Gasphasenreaktion derart langsam aufgebaut werden, dass das UO₂-haltige Pulver bereits in ungemahlenem Zustand rieselfähig und mit einer Schüttdichte oberhalb von etwa 1,4g/cm³ aus der Trockenkonversion gewonnen wird, und als weitere Ausgangspulver mindestens
- ein U₃O₈-haltiges Pulver, und
- ein ein weiteres Schwermetalloxid enthaltendes Pulver, bereit gestellt werden, und wobei aus dem UO₂-haltigen Pulver und den weiteren Ausgangspulvern eine innige Pulvermischung hergestellt wird, und entweder
- zunächst mindestens eines der weiteren.Ausgangspulver zu einer ersten Pulver-Mischung gemahlen wird, und danach das UO₂-haltige Pulver mit der ersten Pulver-Mischung zu der innigen Pulvermischung gemischt wird, oder
- zunächst mindestens eines der weiteren Ausgangspulver mit einem ersten Teil des UO₂-haltigen Pulvers zu einer ersten Pulver-Mischung gemahlen wird, und danach ein zweiter Teil des UO₂-haltigen Pulvers mit der ersten Pulver-Mischung zu der innigen Pulvermischung gemischt wird, und
- danach die innige Pulvermischung weiterbehandelt und zu Formkörpern verpresst wird und die Formkörper gesintert werden.

3. Verfahren nach Anspruch 1 oder 2,
**dadurch gekennzeichnet,**
**dass** die Partikel des UO₂-haltigen Pulvers in der Gasphasenreaktion derart langsam aufgebaut werden, daß die Dichte der Partikel in der Gasphasenreaktion über 0.05g/cm³, insbesondere im Bereich von etwa 0.05-0.1 g/cm³ liegt.

4. Verfahren nach Anspruch 3,
**dadurch gekennzeichnet,**
**dass** die Wirbelbettreaktion bei etwa 600°C unter Verwendung eines Prozessgases, umfassend wenigstens Stickstoff, Wasserstoff und Wasserdampf abläuft.

5. Verfahren nach einem der Ansprüche 1 bis 4,
**dadurch gekennzeichnet,**
**dass** das UO₂-haltige Pulver mit einer Partikelgröße zwischen 1-1000µm, insbesondere mit einer Partikelgröße von im Mittel etwa 80µm aus der Trockenkonversion gewonnen wird.

6. Verfahren nach einem der Ansprüche 1 bis 5,
**dadurch gekennzeichnet,**
**dass** die innige Pulvermischung mit bis zu 25 Gew.% U₃O₈-haltigem Pulver hergestellt wird.

7. Verfahren nach einem der Ansprüche 1 bis 6,
**dadurch gekennzeichnet,**
**dass** das U₃O₈-haltige Pulver zu einem überwiegenden Teil durch Oxidation eines UO₂-haltigen Pulvers hergestellt wird und zu einem geringeren Teil aus Uranschrott.

8. Verfahren nach Anspruch 7,
**dadurch gekennzeichnet,**
**dass** die Oxidation an Luft bei 400°C-1000°C, vorzugsweise bei 400°C - 750°C, insbesondere bei etwa 450°C, erfolgt.

9. Verfahren nach einem der Ansprüche 1 bis 8,
**dadurch gekennzeichnet,**
**dass** das weitere schwermetalloxidhaltige Pulver ein PuO₂-haltiges und/oder ein ThO₂-haltiges und/oder ein Gd₂O₃-haltiges Pulver ist.

10. Verfahren nach einem der Ansprüche 1 bis 9,
**dadurch gekennzeichnet,**
**dass** die Menge des zweiten Teils des UO₂-haltigen Pulvers die Menge des ersten Teils des UO₂-haltigen Pulvers übersteigt.

11. Verfahren nach einem der Ansprüche 1 bis 10,
**dadurch gekennzeichnet,**
**dass** die Menge des ersten Teils des UO2₂-haltigen Pulvers 50-30% der Gesamtmenge des UO₂-haltigen Pulvers und die Menge des zweiten Teils des UO₂-haltigen Pulvers etwa 50-70% der Gesamtmenge des UO₂-haltigen Pulvers ausmacht.

12. Verfahren nach einem der Ansprüche 1 bis 11,
**dadurch gekennzeichnet,**
**dass** praktisch die Gesamtmenge des UO₂-haltigen Pulvers an einem Mahlvorgang vorbeigeführt wird oder nur eine unerhebliche Menge UO₂-haltiges Pulver gemahlen wird.

13. Verfahren nach einem der Ansprüche 1 bis 14,
**dadurch gekennzeichnet,**
**dass** die innige Pulvermischung einem oder mehreren der Prozessschritte aus der Gruppe bestehend aus: Sieben und Mischen, unterzogen wird.

14. Verfahren nach einem der Ansprüche 1 bis 13, **dadurch gekennzeichnet,**
**dass** der zweite Teil des UO₂-haltigen Pulvers zu Granulen granuliert und/oder kompaktiert wird, bevor er mit der ersten Mischung zu der innigen Pulvermischung gemischt wird.

15. Verfahren nach einem der Ansprüche 1 bis 14,
**dadurch gekennzeichnet,**
**dass** die innige Pulvermischung zu Granulen granuliert und/oder kompaktiert wird.

16. Verfahren nach Anspruch 14 oder 15,
**dadurch gekennzeichnet,**
**dass** die Granulen im Mittel eine Größe von weniger als 2mm, insbesondere im Mittel eine Größe von 0,1-1mm, aufweisen.

17. Verfahren nach einem der Ansprüche 14 bis 16,
**dadurch gekennzeichnet,**
**dass** die Granulen eine Schüttdichte von etwa 2,0-2,2 g/cm³ aufweisen.

18. Verfahren nach einem der Ansprüche 1 bis 17,
**dadurch gekennzeichnet,**
**dass** der innigen Pulvermischung ein Additiv aus der Gruppe bestehend aus: Dotierstoff, Neutronengift, Mahlhilfsmittel, Schmiermittel, Porenbildner und Presshilfsmittel, zugegeben wird.

19. Verfahren nach einem der Ansprüche 2 bis 18,
**dadurch gekennzeichnet,**
**dass** die innige Pulvermischung in eine Pressmatrize eingefüllt wird und über einen 10cm übersteigenden, insbesondere über einen 10cm um 10-30% übersteigenden Pressweg zu Formkörpern verpresst wird.

20. Verfahren nach einem der Ansprüche 2 bis 19,
**dadurch gekennzeichnet,**
**dass** die innige Pulvermischung in eine Pressmatrize unter Vibration der Pressmatrize eingefüllt wird und zu Formkörpern verpresst wird.

21. Verfahren nach einem der Ansprüche 2 bis 20,
**dadurch gekennzeichnet,**
**dass** die innige Pulvermischung in eine Pressmatrize eingefüllt wird und mittels Sequenzpressen zu Formkörpern verpresst wird.

22. Verfahren nach einem der Ansprüche 2 bis 21,
**dadurch gekennzeichnet,**
**dass** die Formkörper in einer Gasatmosphäre umfassend wenigstens Wasserstoff und Stickstoff insgesamt etwa 14 Std., und davon bei einer Sintertemperatur im Bereich von 1600°C-1900°C etwa 1-4 Std., gesintert werden.

## Claims

1. Process for producing a MOX nuclear fuel powder,
in which:
- a UO₂-containing powder, obtained from a dry conversion, in which UF₆ is virtually completely converted into UO₂-containing powder in a single process step via UO₂F₂ with the aid of a gas phase reaction and a fluidized bed reaction, the particles of the UO₂-containing powder slowly being built up in the gas phase reaction in such a manner that even in the unmilled state the UO₂-containing powder is already free-flowing and is obtained with a bulk density of over approximately 1.4 g/cm³ from the dry conversion, and, as further starting powders, at least
- a U₃O₈-containing powder, and
- a powder which contains a further heavy metal oxide are provided, and in which an intimate powder mixture is produced from the UO₂-containing powder and the further starting powders, and either
- first of all at least one of the further starting powders is milled to form a first powder mixture, and then the UO₂-containing powder is mixed with the first powder mixture to form the intimate powder mixture, or
- first of all at least one of the further starting powders is milled with a first part of the UO₂-containing powder to form a first powder mixture, and then a second part of the UO₂-containing powder is mixed with the first powder mixture to form the intimate powder mixture.

2. Process for producing a MOX nuclear fuel powder,
in which:
- a UO₂-containing powder, obtained from a dry conversion, in which UF₆ is virtually completely converted into UO₂-containing powder in a single process step via UO₂F₂ with the aid of a gas phase reaction and a fluidized bed reaction, the particles of the UO₂-containing powder slowly being built up in the gas phase reaction in such a manner that even in the unmilled state the UO₂-containing powder is already free-flowing and is obtained with a bulk density of over approximately 1.4 g/cm³ from the dry conversion, and, as further starting powders, at least
- a U₃O₈-containing powder, and
- a powder which contains a further heavy metal oxide are provided, and in which an intimate powder mixture is produced from the UO₂-containing powder and the further starting powders, and either
- first of all at least one of the further starting powders is milled to form a first powder mixture, and then the UO₂-containing powder is mixed with the first powder mixture to form the intimate powder mixture, or
- first of all at least one of the further starting powders is milled with a first part of the UO₂-containing powder to form a first powder mixture, and then a second part of the UO₂-containing powder is mixed with the first powder mixture to form the intimate powder mixture, and
- then the intimate powder mixture is treated further and pressed to form shaped bodies, and the shaped bodies are sintered.

3. Process according to Claim 1 or 2, **characterized in that** the particles of the UO₂-containing powder are built up slowly in the gas phase reaction in such a manner that the density of the particles in the gas phase reaction is over 0.05 g/cm³, in particular in the range from approximately 0.05-0.1 g/cm³.

4. Process according to Claim 3, **characterized in that** the fluidized bed reaction takes place at approximately 600°C using a process gas, comprising at least nitrogen, hydrogen and steam.

5. Process according to one of Claims 1 to 4, **characterized in that** the UO₂-containing powder is obtained with a particle size of between 1-1000 µm, in particular with a particle size of on average approximately 80 µm, from the dry conversion.

6. Process according to one of Claims 1 to 5, **characterized in that** the intimate powder mixture is produced using up to 25% by weight of U₃O₈-containing powder.

7. Process according to one of Claims 1 to 6, **characterized in that** the majority of the U₃O₈-containing powder is produced by oxidation of a UO₂-containing powder, while a small proportion is produced from uranium scrap.

8. Process according to Claim 7, **characterized in that** the oxidation takes place in air at 400°C-1000°C, preferably at 400°C-750°C, in particular at approximately 450°C.

9. Process according to one of Claims 1 to 8, **characterized in that** the further powder which contains heavy metal oxide is a PuO₂-containing powder and/or a ThO₂-containing powder and/or a Gd₂O₃-containing powder.

10. Process according to one of Claims 1 to 9, **characterized in that** the quantity of the second part of the UO₂-containing powder exceeds the quantity of the first part of the UO₂-containing powder.

11. Process according to one of Claims 1 to 10, **characterized in that** the quantity of the first part of the UO₂-containing powder forms 50-30% of the total quantity of the UO₂-containing powder, and the quantity of the second part of the UO₂-containing powder forms approximately 50-70% of the total quantity of the UO₂-containing powder.

12. Process according to one of Claims 1 to 11, **characterized in that** practically the entire quantity of the UO₂-containing powder bypasses a milling operation, or only an insignificant quantity of UO₂-containing powder is milled.

13. Process according to one of Claims 1 to 14, **characterized in that** the intimate powder mixture is subject to one or more of the process steps selected from the group consisting of: screening and mixing.

14. Process according to one of Claims 1 to 13, **characterized in that** the second part of the UO₂-containing powder is compacted and/or granulated to form granules before being mixed with the first mixture to form the intimate powder mixture.

15. Process according to one of Claims 1 to 14, **characterized in that** the intimate powder mixture is compacted and/or granulated to form granules.

16. Process according to Claim 14 or 15, **characterized in that** the size of the granules is on average less than 2 mm, in particular on average 0.1-1 mm.

17. Process according to one of Claims 14 to 16, **characterized in that** the granules have a bulk density of approximately 2.0-2.2 g/cm³.

18. Process according to one of Claims 1 to 17, **characterized in that** an additive selected from the group consisting of: dopant, neutron poison, milling aid, lubricant, pore-forming agent and pressing aid is added to the intimate powder mixture.

19. Process according to one of Claims 2 to 18, **characterized in that** the intimate powder mixture is introduced into a press mold and is pressed to form shaped bodies over a pressing distance which exceeds 10 cm, in particular exceeds 10 cm by 10-30%.

20. Process according to one of Claims 2 to 19, **characterized in that** the intimate powder mixture is introduced into a press mold with the press mold vibrating and is pressed to form shaped bodies.

21. Process according to one of Claims 2 to 20, **characterized in that** the intimate powder mixture is introduced into a press mold and is pressed to form shaped bodies by means of sequential pressing.

22. Process according to one of Claims 2 to 21, **characterized in that** the shaped bodies are sintered in a gas atmosphere comprising at least hydrogen and nitrogen for a total of approximately 14 hours, of which about 1-4 hours were at a sintering temperature in the range from 1600°C-1900°C.

## Revendications

1. Procédé de production d'une poudre de combustible nucléaire MOX, dans lequel :
- on se procure une poudre contenant du UO₂ et obtenue à partir d'une conversion à sec, dans laquelle on transforme, à partir de la conversion à sec, du UF₆ en passant par du UO₂F₂ presque complètement dans un stade unique de procédé, en mettant en oeuvre une réaction en phase gazeuse et une réaction en lit fluidisé, en de la poudre contenant du UO₂, les particules de la poudre contenant du UO₂ étant formées dans la réaction en phase gazeuse lentement de sorte que la poudre contenant du UO₂ est, déjà à l'état non broyé, susceptible de s'écouler et est obtenue en ayant une masse volumique apparente supérieure à environ 1,4g/cm³ et on se procure comme autre poudre de départ au moins
- une poudre contenant du U₃O₈ et
- une poudre contenant un autre oxyde de métal lourd et dans lequel on produit à partir de la poudre contenant du UO₂ et des autres poudres de départ, un mélange intime de poudre, et soit
- on broie d'abord au moins l'une des autres poudres de départ en un premier mélange de poudre et ensuite on mélange la poudre contenant du UO₂ au premier mélange de poudre pour obtenir le mélange intime de poudre, soit
- on broie d'abord au moins l'une des autres poudres de départ avec une première proportion de la poudre contenant du UO₂ en un premier mélange de poudre et ensuite on mélange une deuxième partie de la poudre de UO₂ au premier mélange de poudre pour obtenir le mélange intime de poudre.

2. Procédé de production d'un comprimé fritté de combustible nucléaire MOX, dans lequel
- on se procure une poudre contenant du UO₂ et obtenue à partir d'une conversion à sec, dans laquelle on transforme, à partir de la conversion à sec, du UF₆ en passant par du UO₂F₂ presque complètement dans un stade unique de procédé, en mettant en oeuvre une réaction en phase gazeuse et une réaction en lit fluidisé, en de la poudre contenant du UO₂, les particules de la poudre contenant du UO₂ étant formées dans la réaction en phase gazeuse lentement de sorte que la poudre contenant du UO₂ est, déjà à l'état non broyé, susceptible de s'écouler et est obtenue en ayant une masse volumique apparente supérieure à environ 1,4g/cm³ et on se procure comme autre poudre de départ au moins
- une poudre contenant du U₃O₈ et
- une poudre contenant un autre oxyde de métal lourd et dans lequel on produit, à partir de la poudre contenant du UO₂ et des autres poudres de départ, un mélange intime de poudre et soit
- on broie d'abord au moins l'une des autres poudres de départ en un premier mélange de poudre et ensuite on mélange la poudre contenant du UO₂ au premier mélange de poudre pour obtenir le mélange intime de poudre, soit
- on broie d'abord au moins l'une des autres poudres de départ avec une première proportion de la poudre contenant du UO₂ en un premier mélange de poudre et ensuite on mélange une deuxième partie de la poudre de UO₂ au premier mélange de poudre pour obtenir le mélange intime de poudre.
- on traite ensuite davantage le mélange intime de poudre et on le comprime en des comprimés et on fritte les comprimés.

3. Procédé suivant la revendication 1 ou 2,
**caractérisé,**
**en ce que** l'on forme les particules de la poudre contenant du UO₂ dans la réaction en phase gazeuse lentement de façon à ce que la masse volumique des particules dans la réaction en phase gazeuse soit supérieure à 0,05g/cm³ et comprise notamment entre 0,05 et 0,1g/cm³.

4. Procédé suivant la revendication 3,
**caractérisé,**
**en ce que** la réaction en lit fluidisé se déroule à environ 600°C, en utilisant un gaz de processus comprenant au moins de l'azote, de l'hydrogène et de la vapeur d'eau.

5. Procédé suivant l'une des revendications 1 à 4,
**caractérisé,**
**en ce que** l'on obtient, à partir de la conversion à sec, la poudre contenant du UO₂ ayant une dimension de particule comprise entre 1 et 1000µm, en ayant notamment une dimension de particules d'environ 80 µm en moyenne.

6. Procédé suivant l'une des revendications 1 à 5,
**caractérisé,**
**en ce que** l'on produit le mélange intime de poudre ayant jusqu'à 25 % en poids de poudre contenant du U₃O₈.

7. Procédé suivant l'une des revendications 1 à 6,
**caractérisé,**
**en ce que** l'on produit la poudre contenant du U₃O₈ pour une partie prépondérante par oxydation d'une poudre contenant du UO₂ et pour une partie plus petite à partir de grenaille d'uranium.

8. Procédé suivant la revendication 7,
**caractérisé,**
**en ce que** l'on effectue l'oxydation à l'air entre 400°C et 1000°C notamment à environ 450°C.

9. Procédé suivant l'une des revendications 1 à 8,
**caractérisé,**
**en ce que** l'autre poudre contenant un oxyde de métal lourd est une poudre contenant du PuO₂ et/ou une poudre contenant du ThO₂ et/ou une poudre contenant du Gd₂O₃.

10. Procédé suivant l'une des revendications 1 à 9,
**caractérisé,**
**en ce que** la quantité de la deuxième partie de la poudre contenant UO₂ dépasse la quantité de la première partie de la poudre contenant du UO₂.

11. Procédé suivant l'une des revendications 1 à 10,
**caractérisé,**
**en ce que** la quantité de la première partie de la poudre contenant du UO₂ représente de 50 à 30 % de la quantité totale de la poudre contenant du UO₂ et la quantité de la deuxième partie de la poudre contenant du UO₂ représente environ de 50 à 70 % de la quantité totale de la poudre contenant du UO₂.

12. Procédé suivant l'une des revendications 1 à 11,
**caractérisé,**
**en ce que** l'on fait subir à pratiquement toute la quantité de la poudre contenant du UO₂ une opération de broyage ou l'on ne broie qu'une quantité non considérable de poudre contenant du UO₂.

13. Procédé suivant l'une des revendications 1 à 14,
**caractérisé,**
**en ce que** l'on soumet le mélange intime de poudre à un ou plusieurs des stades opératoires choisis dans le groupe constitué de : tamisage et mélange.

14. Procédé suivant l'une des revendications 1 à 13,
**caractérisé,**
**en ce que** l'on granule et/ou compacte la deuxième partie de la poudre contenant du UO₂ en granules avant de la mélanger au premier mélange en le mélange intime de poudre.

15. Procédé suivant l'une des revendications 1 à 14,
**caractérisé,**
**en ce que** l'on granule et/ou compacte le mélange intime de poudre en granules.

16. Procédé suivant la revendication 14 ou 15,
**caractérisé,**
**en ce que** les granules ont en moyenne une dimension de moins de 2mm, notamment en moyenne une dimension de 0,1 à 1mm.

17. Procédé suivant l'une des revendications 14 à 16,
**caractérisé,**
**en ce que** les granules ont une masse volumique apparente d'environ 2,0 à 2,2g/cm³

18. Procédé suivant l'une des revendications 1 à 17,
**caractérisé,**
**en ce que** l'on ajoute au mélange intime de poudre un additif choisi dans le groupe constitué de :
substance de dopage, poison de neutron, adjuvant de broyage, lubrifiant, agent porogène et adjuvant de compression.

19. Procédé suivant l'une des revendications 2 à 18,
**caractérisé,**
**en ce que** l'on emplit une matrice de presse du mélange intime de poudre et on le comprime en des comprimés sur un trajet de compression dépassant 10cm, dépassant notamment 10cm de 10 à 30%.

20. Procédé suivant l'une des revendications 2 à 19,
**caractérisé,**
**en ce que** l'on emplit une matrice de presse du mélange intime de poudre en faisant vibrer la matrice de presse et on le comprime en comprimés.

21. Procédé suivant l'une des revendications 2 à 20,
**caractérisé,**
**en ce que** l'on emplit une matrice de presse du mélange intime de poudre et on le comprime au moyen de compressions en séquence en des comprimés.

22. Procédé suivant l'une des revendications 2 à 21,
**caractérisé,**
**en ce que** l'on fritte les comprimés dans une atmosphère gazeuse comprenant au moins de l'hydrogène et de l'azote en tout pendant environ 14 heures, dont pendant environ 1 à 4 heures à une température de frittage comprise entre 1600°C et 1900°C.
